Europäisches Patentamt

European Patent Office

Office européen des brevets

(11) Veröffentlichungsnummer: **0 230 311 B1**

(12) **EUROPÄISCHE PATENTSCHRIFT**

(45) Veröffentlichungstag der Patentschrift: **01.04.92**

(21) Anmeldenummer: **87100779.5**

(22) Anmeldetag: **21.01.87**

(51) Int. Cl.⁵: **B29B 7/28**

(54) **Testvorrichtung für Mischvorrichtungen für Mehrkomponentenkunststoffe, insbesondere Polyurethan.**

(30) Priorität: **23.01.86 DE 3601869**

(43) Veröffentlichungstag der Anmeldung:
**29.07.87 Patentblatt 87/31**

(45) Bekanntmachung des Hinweises auf die
Patenterteilung:
**01.04.92 Patentblatt 92/14**

(84) Benannte Vertragsstaaten:
**DE FR GB IT**

(56) Entgegenhaltungen:
**DE-A- 1 933 605       DE-A- 2 453 473**
**DE-A- 2 940 442       FR-A- 1 363 478**
**US-A- 2 692 502       US-A- 3 241 371**
**US-A- 3 381 536**

(73) Patentinhaber: **ELASTOGRAN POLYURETHANE GMBH**
**Landwehrweg**
**W-2844 Lemförde(DE)**

(72) Erfinder: **Taubenmann, Peter**
**Strindbergstrasse 1**
**W-8000 Muenchen(DE)**

(74) Vertreter: **Springer, Hans Jörg, Dr. et al**
**BASF Aktiengesellschaft Patentabteilung**
**Carl-Bosch-Strasse 38**
**W-6700 Ludwigshafen(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Testvorrichtung nach dem Oberbegriff des Anspruches 1.

Bei einer bekannten Testvorrichtung der vorstehend genannten Art werden die beiden Ventile je durch einen Kugelhahn gebildet. Die Kugelhähne sind gemeinsam durch einen pneumatischen Stellantrieb betätigbar. Auf den Kugelhahn in der Testleitung folgt stromabwärts ein Auslaufrohr zur Beruhigung der Strömung der zu testenden Komponente, bevor diese in einen Testbecher oder dergl. läuft. Das die Strömung beruhigende Auslaufrohr ist erforderlich, da der Kugelhahn zu Beginn seiner Öffnungsbewegung nur einen sehr geringen Querschnitt freigibt, wodurch eine stark unruhige, d.h. spritzende, Strömung entsteht. Von der abgezweigten Testmenge verbleibt in dem Auslaufrohr ein mehr oder weniger großer unbekannter Rest, wodurch das Testergebnis verfälscht wird. Dies gilt insbesondere für die Isocyanatkomponente, die in dem Auslaufrohr auskristallisiert, d.h. sich dort absetzt, so daß dieses sogar ggf. erneuert werden muß. Die beiden, die Ventile bildenden Kugelhähne sind so geschaltet, daß eine negative Überdeckung vorliegt, d.h. es gibt beim Öffnen und Schließen einen Übergangsbereich, in dem beide Wege offen sind. Die zu testende Komponente teilt sich undefiniert auf, was ebenfalls zu Fehlern beim Testen führen kann. Insbesondere der Kugelhahn, der das erste Ventil in der Testleitung bildet, wird in seiner Bewegung durch auskristallisiertes Komponentenmaterial, das sich an der Außenfläche der Kugel ebenso wie im Auslaufrohr absetzt, behindert. Hierdurch kommt es zumindest bei der ersten Betätigung nach einer längeren Stillstandszeit zu einer Behinderung, so daß die vorgesehene Testzeit nicht eingehalten wird. Dieses bedingt wiederum einen Fehler, da die Testmenge pro Zeiteinheit festgestellt werden muß. Bei starker Kristallisation kann es vorkommen, daß sich dieser Kugelhahn überhaupt nicht mehr öffnen läßt. Auch bedingen die Kristalle einen erhöhten Verschleiß.

Der Erfindung liegt nun die Aufgabe zugrunde, eine Testvorrichtung der eingangs genannten Art zu schaffen, die genauer und störungssicherer arbeitet.

Diese Aufgabe wird durch die Merkmale des Anspruches 1 gelöst.

Dadurch, daß das zweite Ventil ein Sitzventil ist, das die Austrittsöffnung sehr schnell freigibt, tritt die Komponentenströmung bei richtiger Ansteuerung so ruhig aus der Austrittsöffnung des Sitzventils aus, daß ein Auslaufrohr zur Beruhigung nicht erforderlich ist. Die Testkomponente tritt aus der Austrittsöffnung unmittelbar in den Testbecher ein. Die Schaltung der Ventile stellt sicher, daß die Komponente entweder in der Rücklaufleitung oder in der Testleitung aber nicht gleichzeitig in undefinierter Weise in beiden Leitungen strömt. Eine Kristallisation, insbesondere von Isocyanat, ist bei einem Sitzventil unschädlich, da die Bewegung des Ventiles durch evtl. sich absetzende Kristalle nicht nennenswert behindert wird. Da kein Auslaufrohr vorhanden ist, kann sich auch keine Testmenge absetzen, die nicht erfaßt wird. Ein Sitzventil ist, abgesehen davon, daß eine Kristallisation nicht zu einer Funktionsstörung führt, auch absolut dicht. Der große Auslaufquerschnitt führt zu einem spritzfreien Auslauf.

In vorteilhafter Weise kann die Testvorrichtung so ausgebildet sein, wie in Anspruch 2 angegeben.

Die Ausbildung nach Anspruch 3 mit einem Ringraum trägt zu einer störungsfreien Funkition und zu einem beruhigten Austritt bei.

Wenn die Vorrichtung wie in Anspruch 5 und insbesondere wie in Anspruch 6 ausgebildet ist, dann kann die Einstellung der Drossel so erfolgen, daß beim Testen keine Druckänderung in der Rücklaufleitung auftritt. Bei unterschiedlichen Austragsleistungen stellt sich die vorgespannte Drossel so nach, daß eine Nachstellung von Hand, beispielsweise nach Ablesen eines Manometers, nicht unbedingt erforderlich ist.

Die Ausbildung mit einer Nase nach Anspruch 8 sorgt für eine weitere Beruhigung der Strömung im Bereich der Austrittsöffnung des Sitzventiles.

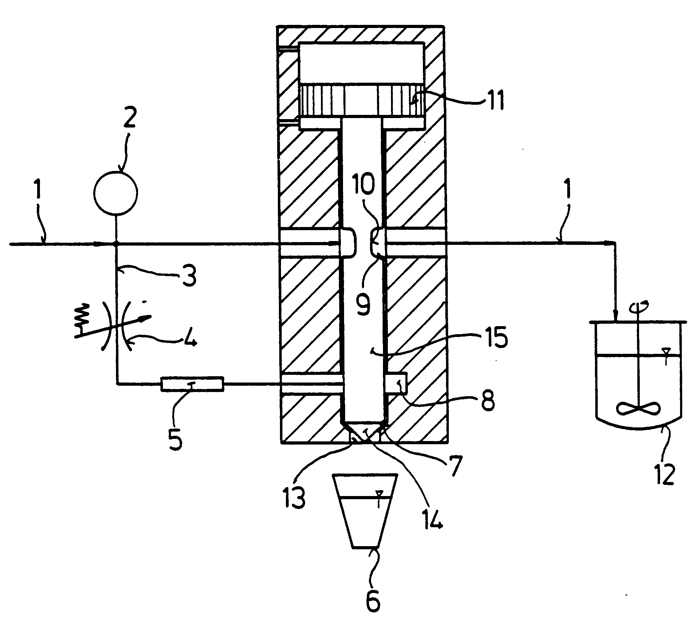

Im folgenden wird die Erfindung unter Hinweis auf die Zeichnung näher erläutert.

In der einzigen Figur ist die Testvorrichtung für eine Komponente schematisch dargestellt. Nicht dargestellt ist die Vorlaufleitung und die eigentliche Mischvorrichtung, da diese bekannt sind. Dargestellt sind lediglich die wesentlichen Teile der Testvorrichtung in der Rücklaufleitung, die mit 1 bezeichnet ist.

Die Rücklaufleitung 1 führt zu einem Vorratsbehälter 12 für die entsprechende Komponente.

Von der Rücklaufleitung 1 zweigt eine Testleitung 3 und eine Leitung zu einem Manometer 2 ab. Stromabwärts von der Abzweigung ist in der Testleitung 3 zuerst eine vorgespannte Drossel 4 und dann eine Beruhigungsstrecke 5 angeordnet. Die Testleitung mündet in ein Sitzventil 7, dessen Austrittsöffnung mit 13 bezeichnet ist. Der Ventilkörper des Sitzventiles wird durch einen Kolben 15 gebildet. Stromaufwärts von dem Sitzventil 7 ist ein Ringraum 8 in dem Gehäuse vorgesehen, in den die Testleitung 3 mündet.

In der Testleitung 1 ist ein Schieberventil 9 ausgebildet. Die beiden Ventile, das Sitzventil 7 und das Schieberventil 9, weisen einen gemeinsamen Ventilkörper, nämlich den Kolben 15 auf, der durch eine hydraulische Kolben- und Zylindereinheit 11 bewegt wird. Anstelle der hydraulischen Betätigung kann auch eine andere, beispielsweise eine pneumatische, vorgesehen sein. Das Schieberventil weist eine Einschnürung 10 in dem Kolben 15 auf.

An der Stirnfläche des Kolbens 15, die die Austrittsöffnung 13 nach oben begrenzt, ist eine Nase 14 vorgesehen, die strömungsgünstig geformt ist, d.h. die aus der Austrittsöffnung 13 austretende Komponentenströmung beruhigt.

Die Geometrie der beiden Ventile 7 und 9 ist so gewählt, daß das eine Ventil erst öffnet, wenn das andere Ventil geschlossen ist, so daß eine Strömung durch beide Leitungen 1 und 3 nicht stattfindet.

Die vorgespannte Drossel 4 ermöglicht in Verbindung mit dem Manometer 2 eine Aufrechterhaltung einer Strömung unter konstantem Druck. Bevor ein Test durchgeführt werden soll, nimmt die Vorrichtung die in der Zeichnung dargestellte Stellung ein, d.h. das Schieberventil 9 ist offen und die Komponente strömt ungehindert über die Rücklaufleitung 1 zum Vorratsbehälter 12. Zur Durchführung eines Testes wird zeitgesteuert die Kolben- und Zylindereinheit 11 betätigt, und wenn das Schieberventil 9 geschlossen ist, öffnet das Sitzventil 7. Die Drossel 4 verhindert Druckschwankungen und die Beruhigungsstrecke 5 sorgt für einen beruhigten Eintritt in den Ringraum 8. Von dort strömt die zu testende Komponentenmenge an der Nase entlang durch die Austrittsöffnung 13 in den Testbecher 6. Wenn das entsprechende Signal zur Beendigung der Testzeit gegeben wird, wird zuerst das Sitzventil 7 geschlossen und dann das Schieberventil 9 geöffnet.

Sich evtl. im Bereich des Sitzventiles in Schließstellung dieses Ventiles bildende Kristalle können die Bewegung dieses Sitzventiles in Öffnungsrichtung nicht behindern. Eine Kristallisation während eines sehr kurzen Testvorganges findet praktisch nicht statt, so daß eine Behinderung in Schließbewegung ebenfalls nicht erfolgt. Die Strömung durch die Austrittsöffnung 13 ist ruhig und spritzerfrei, Rückstände verbleiben in diesem Bereich nicht. Die gesamte Testmenge wird in den Testbecher 6 aufgefangen und der Testvorgang läuft über den vorher festgelegten Zeitraum ab, so daß die Menge pro Zeiteinheit genau festgestellt werden kann.

Die gesamte Vorrichtung mit ihren wesentlichen Bauteilen läßt sich als kompaktes Gerät ausbilden, das in der gesamten Vorrichtung wenig Platz beansprucht und dort gut integriert werden kann.

**Patentansprüche**

1. Testvorrichtung für Mischvorrichtungen für Mehrkomponentenkunststoffe, insbesondere Polyurethan, mit einem ersten Ventil (9) in der Komponentenrücklaufleitung (1) und einem zweiten Ventil (7) in einer stomaufwärts von dem ersten Ventil abzweigenden Testleitung (3), wobei die beiden Ventile gemeinsam und gegenläufig betätigbar sind, dadurch gekennzeichnet, daß das zweite Ventil (7) ein Sitzventil ist, dessen Austrittsöffnung(13) das Ende der Testleitung (3) bildet.

2. Testvorrichtung nach Anspruch 1, dadurch gekennzeichnet, daß das erste Ventil ein Schieberventil (9) ist, und daß die Ventilkörper der beiden Ventile durch einen gemeinsamen Kolben (15) gebildet sind.

3. Testvorrichtung nach Anspruch 1, dadurch gekennzeichnet, daß die Testleitung (3) in das Sitzventil (7) in einen Ringraum (8) mündet, der in dem Ventilgehäuse stromaufwärts von dem Sitz ausgebildet ist.

4. Testvorrichtung nach Anspruch 2, dadurch gekennzeichnet, daß das Schieberventil (9) durch eine Einschnürung (10) in dem gemeinsamen Kolben (15) gebildet ist.

5. Testvorrichtung nach Anspruch 1, dadurch gekennzeichnet, daß in der Testleitung (3) stromaufwärts von dem Sitzventil (7) eine einstellbare Drossel (4) angeordnet ist.

6. Testvorrichtung nach Anspruch 5, dadurch gekennzeichnet, daß die Drossel (4) vorgespannt, insbesondere pneumatisch vorgespannt ist.

7. Testvorrichtung nach Anspruch 1, dadurch gekennzeichnet, daß daß stromaufwärts von dem Sitzventil (7) eine Beruhigungsstrecke (5) vorgesehen ist.

8. Testvorrichtung nach einem oder mehreren der vorstehenden Ansprüche, dadurch gekennzeichnet, daß an der der Austrittsöffnung (13) gegenüberliegenden Stirnfläche des Ventilkörpers des Sitzventiles (7) eine die Strömung beruhigende Nase (14) ausgebildet ist.

9. Testvorrichtung nach Anspruch 8, dadurch gekennzeichnet, daß die Nase (14) zur formschlüssigen Aufnahme eines Werkzeuges ausgebildet ist.

**Claims**

1. A test apparatus for a mixing apparatus for multi-component plastics, in particular polyurethane, having a first valve (9) in the component return line (1) and a second valve (7) in a test line (3) which branches off upstream of the first valve, the two valves being operated jointly and in the opposite sense with respect to one another, wherein the second valve (7) is a seat valve whose outlet aperture (13) forms the end of the test line (3).

2. A test apparatus as claimed in claim 1, wherein the first valve is a sliding valve (9), and the valve body of the two valves is formed by a common piston (15).

3. A test apparatus as claimed in claim 1, wherein the test line (3) ends in the seat valve (7), in an annular space (8) which is formed in the valve housing upstream of the seat.

4. A test apparatus as claimed in claim 2, wherein the sliding valve (9) is formed by a constriction (10) in the common piston (15).

5. A test apparatus as claimed in claim 1, wherein an adjustable restrictor (4) is arranged in the test line (3), upstream of the seat valve (7).

6. A test apparatus as claimed in claim 5, wherein the restrictor (4) is piloted, in particular pneumatically piloted.

7. A test apparatus as claimed in claim 1, wherein a smoothing zone (5) is provided upstream of the seat valve (7).

8. A test apparatus as claimed in one or more of the preceeding claims, wherein a flow-smoothing projection (14) is formed at that end face of the valve body of the seat valve (7) which is opposite the outlet aperture (13).

9. A test apparatus as claimed in claim 8, wherein the projection (14) is designed so as to receive a tool by means of a positive connection.

**Revendications**

1. Dispositif d'essai pour dispositifs de mélange de matières plastiques à plusieurs constituants, en particulier de polyuréthane, comportant un premier robinet (9) sur la conduite de retour de constituant (1) et un deuxième robinet (7) sur une conduite d'essai (3) branchée en amont du premier robinet, ces deux robinets pouvant être actionnés ensemble et en sens contraire, caractérisé par le fait que le deuxième robinet (7) est un robinet à siège dont l'orifice de sortie (13) forme l'extrémité de la conduite d'essai (3).

2. Dispositif d'essai selon la revendication 1, caractérisé par le fait que le premier robinet est un robinet à tiroir (9) et que les obturateurs des deux robinets sont formés par un piston commun (15).

3. Dispositif d'essai selon la revendication 1, caractérisé par le fait que la conduite d'essai (3) débouche dans le robinet à siège (7) dans un espace annulaire (8) qui est ménagé dans le corps des robinets en amont du siège.

4. Dispositif d'essai selon la revendication 2, caractérisé par le fait que le robinet à tiroir (9) est formé par une gorge (10) ménagée dans le piston commun (15).

5. Dispositif d'essai selon la revendication 1, caractérisé par le fait qu'un réducteur de débit réglable (4) est monté sur la conduite d'essai (3) en amont du robinet à siège (7).

6. Dispositif d'essai selon la revendication 5, caractérisé par le fait que le réducteur de débit (4) est précontraint, en particulier pneumatiquement.

7. Dispositif d'essai selon la revendication 1, caractérisé par le fait qu'en amont du robinet à siège (7) est prévu un intervalle de stabilisation (5).

8. Dispositif d'essai selon une ou plusieurs des revendications précédentes, caractérisé par le fait que sur la face frontale de l'obturateur du robinet à siège (7) située en face de l'orifice de sortie (13) est prévu un nez (14) qui stabilise l'écoulement.

9. Dispositif d'essai selon la revendication 8, caractérisé par le fait que le nez (14) est conçu pour recevoir un outil.